# FASCICULE DE BREVET EUROPEEN

(11) **EP 0 952 680 B1**
(45) Date de publication et mention de la délivrance du brevet: **13.12.2006**
(21) Numéro de dépôt: 99410036.0
(22) Date de dépôt: 16.04.1999
(51) Int. Cl.: H04B 3/54, H02J 13/00

(54) **Transmission d'une consigne de fonctionnement par une ligne d'alimentation alternative**
Übertragung eines Betriebsartsignals über eine Wechselspannungsversorgungsleitung
Transmission of an operation mode signal via an AC supply line

(30) Priorité: 20.04.1998 FR 9805200
(43) Date de publication de la demande: 27.10.1999
(73) Titulaire: STMicroelectronics S.A., 92120 Montrouge (FR)
(72) Inventeur: Bardouillet, Michel, 13790 Rousset (FR)
(74) Mandataire: de Beaumont, Michel

(56) Documents cités:
- US-A- 4 328 482
- US-A- 4 644 320
- US-A- 4 868 539

## Description

La présente invention concerne la transmission d'une information sur une ligne d'alimentation alternative d'une charge à impédance d'entrée capacitive. L'invention concerne, plus particulièrement, la transmission d'une consigne de fonctionnement à destination d'un circuit destiné à alimenter une charge à partir d'une tension approximativement continue obtenue par redressement d'une tension alternative.

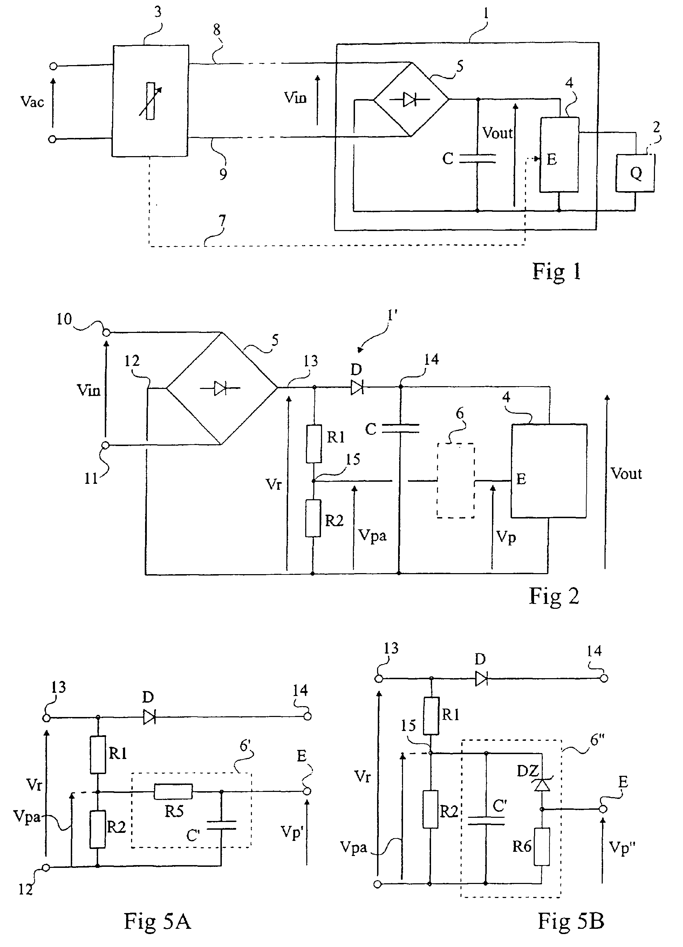

La figure 1 représente, de façon très schématique, la connexion électrique d'un système 1 d'alimentation d'une charge 2 (Q) à partir d'une tension alternative Vin, pourvu d'un pont redresseur 5 de la tension Vin et d'un circuit 4 d'alimentation de la charge 2 à partir d'une tension approximativement continue Vout. La tension Vout est prélevée aux bornes d'un condensateur C recevant une tension alternative redressée de sortie du pont 5.

La tension Vin d'entrée du système 1 est une tension alternative issue, par exemple, d'un variateur 3 d'une tension alternative d'alimentation Vac, par exemple la tension du secteur.

Quand on souhaite faire varier la puissance d'alimentation d'une charge à impédance d'entrée résistive, on utilise généralement un variateur par angle de phase ou par découpage d'angle de phase pour moduler la puissance transmise à la charge 2.

Si un tel variateur par angle de phase se prête bien à des applications dans lesquelles la charge 2 est de type résistive et ne nécessite pas une alimentation à partir d'une récupération d'une tension continue à l'inverse de ce qui est représenté à la figure 1, un tel variateur par angle de phase pose plusieurs problèmes dans le cas d'une charge à impédance d'entrée capacitive.

Un premier problème est que, pour que la variation d'angle de phase se traduise par une variation de la puissance de la charge 2, la tension approximativement continue Vout doit suivre les variations de puissance liées à la variation de l'angle de phase. Il en découle que le circuit 4 servant à alimenter la charge 2 voit sa propre alimentation varier ce qui peut engendrer des dysfonctionnements en raison des besoins d'alimentation des composants de ce circuit 4. Par exemple, si le circuit 4 constitue un convertisseur à découpage servant à alimenter une charge 2 constituée d'une lampe fluorescente, une variation de la tension Vout nuit au fonctionnement correcte du convertisseur à découpage.

De plus, un découpage dans la zone de charge d'un condensateur constitutif de l'impédance d'entrée entraîne un courant efficace important qui n'est pas souhaitable.

Par conséquent, pour des charges ayant une impédance d'entrée capacitive, on utilise classiquement d'autres moyens que la variation par angle de phase pour intervenir sur le fonctionnement du système 1.

Dans un circuit 4 classique tel que représenté à la figure 1, la fonction de variation de puissance est généralement effectuée à partir d'une entrée analogique basse tension E du circuit 4. Le signal appliqué à la borne E sert, par exemple dans une application à une lampe fluorescente, à modifier la fréquence du courant alternatif fourni par le convertisseur à découpage de manière à faire varier l'intensité lumineuse. Cette borne E de commande en gradation d'intensité lumineuse est destinée à être commandée par un variateur externe 3 fixant une tension de commande comprise généralement entre 0 et 5 volts et proportionnelle à l'intensité lumineuse souhaitée.

Un inconvénient majeur de cette solution de variation réside dans le besoin de disposer d'une liaison basse tension entre le système 1 de commande de la charge 2 (ici une lampe fluorescente) et un potentiomètre-interrupteur mécanique (le variateur 3), généralement situé à distance. Comme l'illustre la figure 1, outre les deux conducteurs 8, 9 (phase et neutre) de l'alimentation alternative Vin, on doit en effet prévoir deux conducteurs (pointillés 7) basse tension entre un interrupteur 3 comprenant un gradateur et le système électronique 1 de commande de la charge 2.

Une autre solution classique pour transmettre une consigne d'intensité lumineuse à un circuit 4 de commande en alimentation de la charge consiste à effectuer une modulation du courant porteur, c'est-à-dire à moduler le courant d'alimentation alternatif par un signal à haute fréquence transmettant la consigne d'intensité lumineuse. Une telle solution nécessite, côté gradateur 3, un système de modulation (non représenté) du courant porteur pour émettre la consigne et, côté système 1, un démodulateur (non représenté) chargé d'extraire la consigne de puissance de l'alimentation alternative.

Une telle solution présente l'avantage d'éviter le recours à une liaison 7 supplémentaire. Toutefois, elle présente l'inconvénient d'être particulièrement complexe et coûteuse à mettre en oeuvre.

La présente invention vise à proposer une nouvelle solution pour transmettre une consigne à un circuit d'alimentation d'une charge qui pallie les inconvénients des solutions classiques.

L'invention vise, en particulier, à proposer une solution simple qui ne nécessite pas de liaison supplémentaire entre l'élément de commande (le variateur 3) et le circuit d'alimentation de la charge.

L'invention vise, en particulier, à proposer un système d'acquisition d'une consigne, provenant d'une variation par découpage d'angle de phase d'une tension alternative d'alimentation, au sein d'un circuit d'alimentation de la charge à partir d'une tension approximativement continue obtenue par redressement de cette tension alternative.

Plus généralement, la présente invention vise à proposer un système de transmission qui permette la transmission d'une consigne analogique quelconque en utilisant la tension alternative d'alimentation comme support de transmission et sans qu'il soit nécessaire de recourir à un système d'émission-réception par modulation haute fréquence.

Pour atteindre ces objets, la présente invention prévoit un circuit d'alimentation d'une charge à partir d'une tension approximativement continue obtenue par redressement d'une tension alternative, comportant des moyens pour extraire de la tension alternative redressée une information fonction d'une variation d'angle de phase de la tension alternative, et un moyen pour rendre la tension approximativement continue d'alimentation de la charge indépendante de ladite variation d'angle de phase de la tension alternative.

Selon un mode de réalisation de la présente invention, ladite tension alternative redressée est délivrée entre deux bornes respectivement positive et négative, le circuit comportant, entre ladite borne positive et une première borne d'un condensateur aux bornes duquel est prélevée la tension approximativement continue d'alimentation de la charge, un élément de conduction unidirectionnel, et entre lesdites bornes positive et négative, un pont diviseur de tension délivrant une basse tension proportionnelle à la tension redressée.

Selon un mode de réalisation de la présente invention, le circuit comporte un moyen d'intégration de la basse tension redressée pour délivrer une basse tension analogique fonction de l'angle de phase de la tension alternative.

Selon un mode de réalisation de la présente invention, la variation d'angle de phase de la tension alternative est effectuée sur au plus une demi-alternance et hors de périodes de charge du condensateur.

Selon un mode de réalisation de la présente invention, ladite information est une consigne de fonctionnement à destination d'un convertisseur d'énergie destiné à commander la charge.

Selon un mode de réalisation de la présente invention, la variation d'angle de phase de la tension alternative est effectuée entre 50 et 100% au moyen d'un variateur par coupure d'angle de phase.

Selon un mode de réalisation de la présente invention, ladite charge est une lampe fluorescente.

La présente invention prévoit en outre un procédé de transmission d'une information sur une ligne d'alimentation alternative d'un circuit d'alimentation d'une charge à impédance d'entrée capacitive comprenant un condensateur propre à fournir une tension approximativement continue, ce procédé consistant côté émetteur, à faire varier l'angle de phase de la tension alternative sur au plus une demi-alternance et hors de périodes de charge du condensateur, et côté récepteur, à isoler l'information relative à l'angle de phase en amont du condensateur.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 qui a été décrite précédemment est destinée à exposer l'état de la technique et le problème posé ;
la figure 2 représente un mode de réalisation d'un circuit d'alimentation d'une charge à partir d'une tension approximativement continue obtenue par redressement d'une tension alternative selon la présente invention ;
la figure 3 représente un premier mode de réalisation d'un moyen d'émission d'une consigne analogique selon la présente invention ;
les figures 4A à 4F illustrent, sous forme de chronogrammes, le fonctionnement du circuit de la figure 2 en utilisant un moyen d'émission tel que représenté en figure 3 ;
la figure 5A représente un premier mode de réalisation d'un moyen d'intégration du circuit de la figure 2 ;
la figure 5B représente un deuxième mode de réalisation du moyen d'intégration du circuit de la figure 2 ;
la figure 6 représente un deuxième mode de réalisation d'un moyen d'émission d'une consigne analogique selon la présente invention ;
les figures 7A à 7C illustrent, sous forme de chronogrammes, le fonctionnement du circuit de la figure 2 en utilisant un moyen d'émission tel que représenté en figure 6 ;
la figure 8 illustre un premier exemple d'application de la présente invention à une variation d'intensité lumineuse d'une lampe fluorescente ; et
la figure 9 illustre un deuxième exemple d'application de la présente invention à une commande en vitesse de rotation d'un moteur.

Les mêmes éléments ont été désignés par les mêmes références aux différentes figures. Pour des raisons de clarté, seuls les éléments qui sont nécessaires à la compréhension de l'invention ont été représentés aux figures et seront décrites par la suite.

Une caractéristique de la présente invention est d'utiliser une variation par angle de phase de la tension d'alimentation alternative pour transmettre une information analogique à un circuit alimentant une charge à partir d'une tension approximativement continue obtenue par redressement de la tension alternative, sans modifier la tension approximativement continue utilisée par le circuit d'alimentation de la charge.

La figure 2 représente un mode de réalisation d'un circuit 1' d'alimentation d'une charge à impédance d'entrée capacitive selon la présente invention.

Ce circuit comporte, de façon classique, un pont 5 de diodes dont deux bornes d'entrée sont connectées à deux bornes 10, 11 d'application d'une tension alternative Vin.

Selon l'invention, la tension alternative Vin correspond à une tension d'alimentation alternative, par exemple la tension Vac du secteur, à laquelle on a fait subir un découpage d'angle de phase.

Une première borne 12 de sortie redressée du pont 5 constitue une borne de masse du circuit 1'. Une deuxième borne 13 de sortie redressée du pont 5 a, comme dans un circuit classique, pour objet de délivrer à l'aide d'un condensateur C une alimentation approximativement continue Vout à un circuit 4 servant à alimenter une charge (non représentée).

Selon la présente invention, la tension Vr de sortie du pont 5, prélevée entre les bornes 13 et 12 est appliquée à deux extrémités d'un pont diviseur de tension constitué de deux résistances R1, R2 associées en série. Selon l'invention, ce pont diviseur est destiné à extraire, de la tension alternative redressée, une basse tension Vpa fonction de l'angle de phase de la tension Vin.

Une autre caractéristique de la présente invention est de prévoir une diode D en série avec le condensateur C entre les bornes 13 et 12 de sortie redressée, l'anode de la diode étant connectée à la borne 13 et la tension approximativement continue Vout restant prélevée aux bornes 14, 12 du condensateur C.

Le rôle de la diode D, ou d'un élément de conduction unidirectionnel analogue, est d'autoriser un prélèvement de la tension alternative redressée Vr avant son filtrage par le condensateur C. Cela est, selon l'invention, indispensable pour extraire de la tension d'alimentation alternative Vin l'information analogique véhiculée par la variation de l'angle de phase de cette tension alternative.

Le dimensionnement du pont diviseur résistif R1-R2 est fonction de l'amplitude de la tension alternative d'alimentation Vac et de l'amplitude souhaitée pour la basse tension analogique Vpa représentant l'information basse tension analogique extraite de l'alimentation alternative et destinée au circuit 4 d'alimentation de la charge sous la forme d'une tension de consigne analogique Vp.

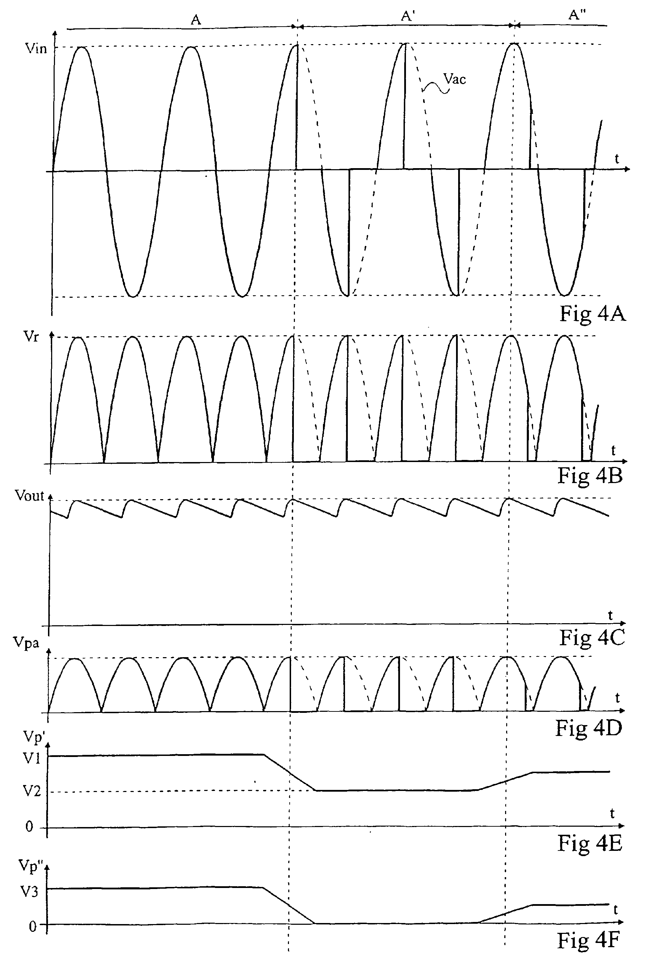

De préférence, un circuit intégrateur 6 (en pointillés à la figure 2) est intercalé entre le point milieu 15 du pont diviseur résistif R1-R2 et la borne E du circuit 4 recevant la tension de consigne. Le rôle de cet intégrateur est, comme on le verra par la suite en relation avec la figure 4, de convertir les variations d'angle de phase de la tension alternative redressée Vr en niveaux de tension continus.

On notera que tout autre moyen équivalent abaisseur de tension pourra être utilisé à la place du pont diviseur résistif R1, R2. Toutefois, l'utilisation de résistances constitue un mode de réalisation préféré de la présente invention eu égard à la simplicité de ce mode de réalisation.

De même, tout autre moyen de conduction unidirectionnel pourra être utilisé à la place de la diode D qui constitue cependant un mode de réalisation préféré en raison de sa simplicité.

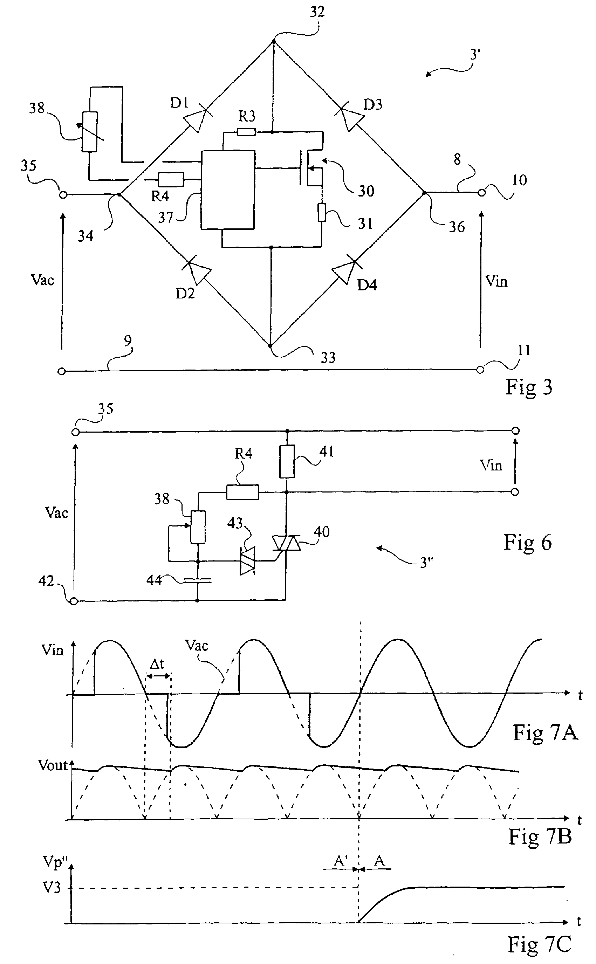

Selon l'invention, la tension approximativement continue Vout aux bornes du condensateur C n'est pas perturbée par la variation d'angle de phase de la tension alternative d'alimentation. Cette caractéristique est respectée pourvu que l'on veille, côté variateur (non représenté à la figure 2), à ce que la plage de variation de l'angle de phase exclut les plages de recharge du condensateur C. Cette caractéristique de l'invention sera mieux comprise par la suite en relation avec l'exposé des figures 4 et 7.

La figure 3 représente un exemple de variateur 3' par découpage d'angle de phase du type auquel s'applique la présente invention. Ce variateur 3' est basé sur l'utilisation d'un interrupteur 30 (ici, un transistor MOS) connecté en série avec une résistance de mesure 31 entre deux bornes 32 et 33 de sortie redressée d'un pont de diodes D1, D2, D3 et D4. Une première borne alternative 34 du pont est connectée à une borne 35 (par exemple la phase) du secteur Vac, tandis qu'une deuxième borne alternative 36 du pont constitue ici une borne de sortie (phase 8) de l'alimentation alternative Vin modifiée, destinée à être raccordée à la borne 10 (figure 2) d'entrée du circuit 1'. L'autre ligne (neutre 9) de l'alimentation alternative n'est ici pas interrompue. Le transistor 30 est commandé par un convertisseur 37 (par exemple, un circuit TS555 commercialisé par la société SGS-Thomson Microelectronics) connecté entre la borne 33 et, par l'intermédiaire d'une résistance d'alimentation R3, la borne 32.

Le fonctionnement d'un variateur tel que représenté à la figure 3 est parfaitement connu. Le circuit 37 reçoit une consigne de réglage, par exemple, d'un potentiomètre 38 monté selon l'invention en série avec une résistance R4. Le rôle de la résistance R4 est de limiter la plage de variation de la consigne de réglage du circuit 37 et, par voie de conséquence, la plage de variation de l'angle de phase de la tension Vin délivrée. Cette résistance R4 pourra être remplacée par une limitation de l'excursion du potentiomètre 38.

Le variateur représenté à la figure 3 constitue un exemple de variateur basé sur un découpage de phase par interrupteur à ouverture qui constitue une solution préférée du variateur de la présente invention.

Selon ce mode de réalisation d'un variateur à découpage d'angle de phase par coupure, une caractéristique de présente invention est de limiter la plage de variation de l'angle de phase de la tension Vin délivrée entre 50 et 100%.

Cette caractéristique de l'invention est illustrée par les figures 4A à 4F qui représentent, sous forme de chronogrammes, un exemple de formes d'ondes de différentes tensions caractéristiques du circuit de l'invention. La figure 4A représente la tension Vin. La figure 4B représente la tension Vr en sortie du pont 5 (figure 2). La figure 4C représente l'allure de la tension Vout aux bornes du condensateur C. La figure 4D représente l'allure de la tension Vpa aux bornes de la résistance R2. Les figures 4E et 4F représentent, respectivement selon deux modes de réalisation distincts du circuit intégrateur 6, l'allure de tensions de consigne Vp' et Vp" destinées à être appliquées à l'entrée E du circuit 4 d'alimentation de la charge.

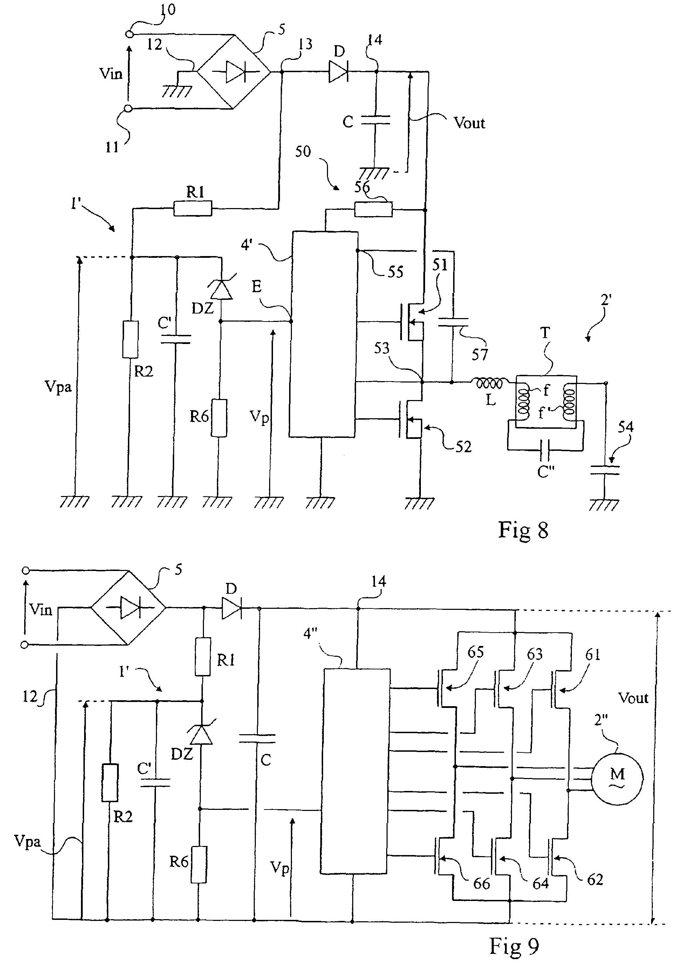

Dans l'exemple représenté aux figures 4, on suppose successivement trois niveaux de consigne souhaités et fixés par le variateur 3' de la figure 3. Par exemple, ces trois consignes correspondent à trois niveaux d'intensités lumineuses souhaités pour une lampe fluorescente comme on le verra en relation avec l'exemple d'application de la figure 8. Dans une première phase A, l'angle de phase imposé par le variateur 3' est maximum, c'est-à-dire que la tension Vin correspond à la tension Vac. Dans ce cas, la tension Vr en sortie du pont 5 (figure 2) comprend des alternances entières, de même que la tension Vpa aux bornes de la résistance R2. Dans une deuxième phase A', on suppose que le variateur 3' est réglé pour fournir une tension Vin ayant un angle de phase de 50%. Il en découle que les tensions Vr et Vpa présentent, à chaque alternance redressée, également un angle de phase de 50%. Dans une troisième phase A" de fonctionnement, on s'est placé dans une position intermédiaire d'angle de phase compris entre 50 et 100%.

Comme il ressort de la figure 4C, le fait de prévoir une coupure de l'interrupteur 30 uniquement entre 50 et 100% de l'angle de phase permet de préserver une tension Vout qui n'est pas affectée par les variations d'angle de phase qui se produisent pendant les périodes de décharge du condensateur. Par conséquent, la transmission de la consigne au circuit 4 n'affecte pas son alimentation. Cela est lié, en particulier, à la présence de la diode D entre les points 13 et 14.

Comme il ressort de la figure 4D, la valeur moyenne de la basse tension Vpa est différente selon la phase A, A' ou A". Cette valeur moyenne est maximum dans la phase A, minimum dans la phase A' et intermédiaire dans la phase A". Par conséquent, en intégrant le signal présent sur la borne 15 (la tension Vpa), on peut récupérer un niveau de tension Vp qui est fonction de l'angle de phase choisi pour la tension Vin.

Selon un premier mode de réalisation du circuit intégrateur illustré par la figure 5A, la tension de consigne Vp' (figure 4E) varie entre deux niveaux extrêmes V1 et V2, tous deux positifs. Le circuit intégrateur 6' est dans ce cas constitué d'une résistance R5 associée en série avec un condensateur C'. Cette association en série est connectée en parallèle sur la résistance R2 et la tension de consigne Vp' est prélevée aux bornes du condensateur C'.

Dans un deuxième mode de réalisation où l'on souhaite ramener l'excursion de la tension de consigne Vp entre 0 volt et un niveau positif, on utilise un circuit d'intégration 6" tel que représenté en figure 5B. Dans ce mode de réalisation, un condensateur C' est connecté en parallèle sur la résistance R2. Une diode Zener DZ associée en série avec une résistance R6 est connectée en parallèle sur le condensateur C'. La tension Vp" de consigne est prélevée aux bornes de la résistance R6. Dans un tel mode de réalisation, la tension Vp" varie entre 0 volt et une valeur V3 correspondant à la tension Vpa diminuée de la tension d'avalanche de la diode Zener. Ce mode de fonctionnement est illustré par la figure 4F.

On notera que dans le mode de réalisation de la figure 5B, le rôle de résistance d'intégration est joué par la résistance R1. On pourra toutefois, à titre de variante, utiliser une résistance entre le point 15 et la première borne du condensateur C'. De même, dans le mode de réalisation illustré par la figure 5A, la résistance R5 est optionnelle et le rôle de résistance d'intégration peut également être joué par la résistance R1.

Les intervalles de temps nécessaires au changement de niveaux de la tension Vp' ou Vp" dépendent bien entendu de la constante d'intégration, c'est-à-dire de la constante de temps introduite par le condensateur C' et la résistance R5 (figure 5A) ou par le condensateur C' et la résistance R1 (figure 5B).

A titre d'exemple particulier de réalisation, pour obtenir une variation de la tension de consigne d'une amplitude de 5 volts à partir d'une variation d'angle de phase comprise entre 50 et 100% d'une tension alternative d'alimentation de 220 volts, on prévoira une résistance R1 d'une valeur de 100 kilo-ohms et une résistance R2 d'une valeur de 3,3 kilo-ohms. Dans le mode de réalisation du circuit d'intégration représenté à la figure 5A, on peut prévoir, par exemple, une résistance R5 de 100 kilo-ohms et un condensateur C' de 1 microfarad. Dans ce cas, les potentiels V1 et V2 de la tension Vp' ont respectivement pour valeur 10 et 5 volts. On considère pour cela que la tension Vpa a une amplitude maximum de 14,14 volts.

Dans le cas du mode de réalisation illustré par la figure 5B, on peut prendre une valeur de 5 volts pour la diode Zener DZ et une valeur de 10 kilo-ohms pour la résistance R6. On obtient alors une tension Vp" qui varie entre 0 et 5 volts.

La figure 6 représente un deuxième mode de réalisation d'un variateur par découpage d'angle de phase pouvant être utilisé avec un circuit 1' selon l'invention tel que représenté en figure 2. Le variateur 3" représenté à la figure 6 est réalisé à partir d'un triac 40 monté en série avec une résistance 41 entre les bornes 35 et 42 d'application de la tension alternative d'alimentation Vac. La gâchette du triac 40 est reliée par l'intermédiaire d'un diac 43, au point milieu d'une association en série d'un condensateur 44 et d'un potentiomètre 38 (le cas échéant associé à une résistance R4 de limitation) connectée en parallèle avec le triac 40.

Le fonctionnement d'un variateur à triac tel que représenté à la figure 6 est parfaitement connu. Lorsque l'on est au début d'une alternance, le triac 40 n'est pas amorcé. L'amorçage du triac 40 ne se produit qu'au moment où la cellule RC (constituée du condensateur 44, de la résistance R4 et du potentiomètre 38) génère aux bornes du condensateur C, une tension suffisante pour amorcer le triac. La tension d'amorçage d'un triac est généralement d'une trentaine de volts et correspond à la tension seuil du diac 43. Le triac conduit alors en avalanche.

En modifiant la résistance du potentiomètre 38, on fait varier le retard à l'amorçage du triac 40 par rapport au début de l'alternance, donc l'angle de phase. Le triac une fois enclenché s'ouvre au passage par zéro de l'alternance. Un variateur tel qu'illustré à la figure 6 est généralement appelé un variateur par fermeture d'angle de phase.

Les figures 7A à 7C illustrent, sous forme de chronogrammes, le fonctionnement d'un circuit d'alimentation selon l'invention lorsqu'il est commandé par un variateur du type à fermeture. La figure 7A représente l'allure de la tension Vin. La figure 7B illustre l'allure de la tension Vout et la figure 7C illustre l'allure de la tension de consigne Vp". On suppose, pour la représentation des figures 7A à 7C, que le circuit intégrateur du système de l'invention est pourvu d'une diode Zener comme cela est représenté en figure 5B.

De façon symétrique à ce qui a été exposé en relation avec les figures 4A à 4F, une variation de l'angle de phase au moyen du triac 40 provoque une variation linéaire du niveau de la tension Vp". Dans l'exemple des figures 7A à 7C, on a représenté une première phase de fonctionnement A' dans laquelle le potentiomètre 38 est réglé pour que l'angle de phase corresponde au niveau minimum de la tension Vp", c'est-à-dire que la diode Zener de l'intégrateur est en avalanche. Dans une deuxième phase de fonctionnement A, le potentiomètre 38 est réglé de sorte que l'angle de phase est maximum et la tension Vp" atteint le niveau V3.

On notera que, dans le cas d'un triac, l'angle de phase ne peut jamais être nul. À la figure 7A, on a supposé le triac parfait, c'est-à-dire capable de se fermer au passage par zéro de l'alternance ce qui en pratique est impossible.

Dans un mode de réalisation avec un variateur à fermeture, on veillera à dimensionner le variateur et le circuit de l'invention pour que l'angle de phase, ou l'intervalle de temps Δt de variation apporté par le variateur 3", reste inférieur à la durée séparant le début de l'alternance du début de conduction du pont redresseur 5 servant à alimenter la charge. En effet, dans le cas contraire, le niveau de la tension Vout (figure 7B) ne pourrait plus être maintenu constant. Par conséquent, la plage de variation en angle de phase est, selon ce mode de réalisation, choisie pour garantir que le condensateur C, aux bornes duquel est prélevée la tension de sortie Vout, puisse se charger correctement à chaque alternance.

À titre d'exemple particulier de réalisation, pour un variateur à triac, on pourra prévoir une plage de variation d'angle de phase comprise entre quelques pour cents (0 % en supposant un interrupteur à fermeture parfait) et environ 30%.

On notera que la solution d'un variateur basé sur un découpage d'angle de phase par interrupteur à ouverture (figure 3) constitue une solution préférée par rapport à un variateur basé sur un découpage de phase par interrupteur à fermeture (figure 6). Outre l'avantage de permettre une plage de variation plus étendue en angle de phase (50 à 100% au lieu de 0 à 30%), la solution basée sur un découpage de phase par interrupteur à ouverture présente l'avantage d'avoir un fonctionnement indépendant de l'application. En effet, le condensateur C ne se charge jamais pendant la décroissance d'une alternance et cette décroissance est donc disponible pour transmettre l'information jusqu'au circuit d'alimentation de la charge.

La figure 8 représente un exemple de schéma d'application de l'invention à un circuit de commande d'une lampe fluorescente T.

Le pont 5 et le condensateur C fournissent, par exemple pour une tension alternative Vin de 220 volts, une alimentation continue de 300 volts à un convertisseur à découpage 50 qui est de type "demi-pont symétrique". Ce convertisseur fournit un courant alternatif à une fréquence généralement d'environ 30 kHz à la lampe fluorescente T par l'intermédiaire d'une inductance haute fréquence L.

Le convertisseur 50 est généralement constitué d'un circuit 4' de commande associé à deux interrupteurs 51, 52 (par exemple, deux transistors MOS puissance) connectés en série entre la borne 14 et la masse, le condensateur C étant connecté en parallèle à cette association en série. Le point milieu de l'association en série des transistors 51 et 52 constitue une borne 53 de sortie du convertisseur à découpage 50, reliée à une première borne de l'inductance haute fréquence L montée en série avec un premier filament f de la lampe T. Un condensateur C" de faible valeur relie le premier filament f à un deuxième filament f' de la lampe T et participe à l'amorçage de celle-ci. La borne libre du filament f' est connectée à la masse par l'intermédiaire d'un condensateur 54 de filtrage de la composante continue dans la lampe T.

Les interrupteurs 51 et 52 sont commandés par le circuit 4'. La borne 53 constitue une borne de référence flottante pour l'interrupteur 51. Le circuit 4' est alimenté à partir de la borne 14 par l'intermédiaire d'une résistance 56. Un condensateur de pompe de charge 57 relie la borne 53 à une borne 55 du circuit 4' correspondant à l'alimentation d'un amplificateur de commande de l'interrupteur 51.

Le circuit 4' peut comporter d'autres bornes de configuration et de paramétrage non représentées.

Le fonctionnement d'un circuit de commande tel que représenté à la figure 8 est parfaitement connu pour ce qui concerne la commande de la lampe T. À titre d'exemple particulier, le circuit 4' peut être un circuit intégré connu sous la dénomination L6574 et fabriqué par la société SGS-Thomson Microelectronics.

Dans un tel circuit, la fonction de gradation de l'intensité lumineuse de la lampe est effectuée à partir d'une entrée analogique E basse tension recevant une tension de consigne Vp selon l'invention.

Le recours à un circuit 1' selon l'invention d'extraction d'une consigne de puissance depuis la tension alternative Vin, sans modifier la charge du condensateur C fournissant la tension Vout destinée au circuit 4' et à la lampe, présente de multiples avantages.

Tout d'abord, il est désormais possible de disposer d'une fonction de gradation d'intensité lumineuse sans nécessiter deux fils basse tension supplémentaires entre un interrupteur et la lampe. Selon l'invention, cette transmission de consigne d'intensité lumineuse s'effectue grâce à l'alimentation elle-même. À cet égard, on notera que l'invention ne nécessite pas de système d'émission-réception haute fréquence complexe et permet l'utilisation de variateurs classiques tels qu'illustrés, par exemple, aux figures 3 et 6.

De plus, l'encombrement réduit des constituants du circuit 1' selon l'invention par rapport aux dispositifs classiques permet d'envisager leur intégration dans le culot d'une lampe fluorescente, par exemple, de type CFL.

En outre, en utilisant un variateur de type à interrupteur à ouverture, c'est-à-dire utilisant l'angle de phase compris entre 50 et 100% de l'alternance, on dispose d'un produit versatile que ce soit côté variateur ou côté charge.

La figure 9 représente, de façon très schématique, un deuxième exemple d'application d'un circuit d'alimentation selon la présente invention. Cet exemple s'applique à la commande d'un moteur 2" à partir d'un circuit 4" de commande triphasée. Un tel circuit de commande contrôle les périodes respectives d'ouverture et de fermeture de six commutateurs (par exemple, des transistors MOS) 61, 62, 63, 64, 65 et 66 appariés deux à deux en parallèle entre les bornes 14 et 12 d'un système d'alimentation redressé tel qu'illustré en relation avec la figure 2. Le circuit 4" reçoit une consigne basse tension Vp constituant, dans cette application, une consigne de vitesse du moteur 2". Cette consigne de vitesse peut donc, selon l'invention, être transmise de façon extrêmement simple depuis un élément de commande distant comprenant un variateur par découpage d'angle de phase, sans nuire à l'alimentation de puissance proprement dite du moteur par l'intermédiaire du condensateur C fournissant une alimentation continue entre les bornes 14 et 12.

Le fonctionnement d'un système de commande de moteur tel qu'illustré par la figure 9 est parfaitement classique et ne fait pas l'objet de la présente invention. On notera simplement que ce qui a été schématisé par un circuit de commande 4" est généralement en pratique réalisé au moyen de plusieurs circuits intégrés associés entre eux.

Dans les exemples d'application des figures 8 et 9, on a supposé arbitrairement que les tensions de consignes Vp avaient besoin d'être référencées à la masse et les circuits 1' respectifs d'extraction de ces consignes Vp sont pourvus d'un circuit d'intégration tel qu'illustré en relation avec la figure 5B.

Bien entendu, la présente invention est susceptible de diverses variantes et modifications qui apparaîtront à l'homme de l'art. En particulier, le dimensionnement des différents composants du système de l'invention sera adapté en fonction de l'application et, en particulier, en fonction de la tension d'alimentation et de la plage d'excursion souhaitée pour la basse tension de consigne. De plus, d'autres variateurs que ceux pris pour exemple pourront être utilisés pourvu qu'ils respectent les fonctionnalités décrites. En outre, l'invention s'applique à tout circuit d'alimentation d'une charge à partir d'une tension approximativement continue provenant d'une tension alternative.

## Revendications

1. Circuit d'alimentation d'une charge (2, 2', 2") à partir d'une tension approximativement continue (Vout) obtenue par redressement (5) d'une tension alternative (Vin), **caractérisé en ce qu'**il comporte :
des moyens (1') pour extraire de la tension alternative redressée (Vr) une information fonction d'une variation d'angle de phase de la tension alternative (Vin) ; et
un moyen (D) pour rendre la tension approximativement continue (Vout) d'alimentation de la charge indépendante de ladite variation d'angle de phase de la tension alternative.

2. Circuit selon la revendication 1, dans lequel ladite tension alternative redressée (Vr) est délivrée entre deux bornes respectivement positive (13) et négative (12), **caractérisé en ce qu'**il comporte :
entre ladite borne positive et une première borne d'un condensateur (C) aux bornes duquel est prélevée la tension approximativement continue (Vout) d'alimentation de la charge (2, 2',2"), un élément (D) de conduction unidirectionnel ; et
entre lesdites bornes positive et négative, un pont diviseur de tension (R1, R2) délivrant une basse tension (Vpa) proportionnelle à la tension redressée (Vr).

3. Circuit selon la revendication 2, **caractérisé en ce qu'**il comporte un moyen (6, 6', 6") d'intégration de la basse tension redressée (Vpa) pour délivrer une basse tension (Vp) analogique fonction de l'angle de phase de la tension alternative (Vin).

4. Circuit selon la revendication 2 ou 3, **caractérisé en ce que** la variation d'angle de phase de la tension alternative (Vin) est effectuée sur au plus une demi-alternance et hors de périodes de charge du condensateur (C).

5. Circuit selon l'une quelconque des revendications 1 à 4, **caractérisé en ce que** ladite information est une consigne de fonctionnement à destination d'un convertisseur d'énergie (4, 4', 4") destiné à commander la charge (2, 2', 2").

6. Circuit selon l'une quelconque des revendications 1 à 5, **caractérisé en ce que** la variation d'angle de phase de la tension alternative (Vin) est effectuée entre 50 et 100% au moyen d'un variateur (3') par coupure d'angle de phase.

7. Circuit selon l'une quelconque des revendications 1 à 6, **caractérisé en ce que** ladite charge (2') est une lampe fluorescente (T).

8. Procédé de transmission d'une information sur une ligne d'alimentation alternative d'un circuit d'alimentation d'une charge à impédance d'entrée capacitive comprenant un condensateur propre à fournir une tension approximativement continue, **caractérisé en ce qu'**il consiste :
côté émetteur, à faire varier l'angle de phase de la tension alternative sur au plus une demi-alternance et hors de périodes de charge du condensateur ; et
côté récepteur, à isoler l'information relative à l'angle de phase en amont du condensateur.

## Claims

1. A circuit for supplying a load (2, 2', 2") from an approximately D.C. voltage (Vout) obtained by rectifying (5) an A.C. voltage (Vin), **characterized in that** it includes:
means (1') for extracting from the rectified A.C. voltage (Vr) information depending on a phase angle variation of the A.C. voltage (Vin); and
means (D) for making the approximately D.C. load supply voltage (Vout) independent from the phase angle variation of the A.C. voltage.

2. The circuit of claim 1, wherein the rectified A.C. voltage (Vr) is provided between two respectively positive (13) and negative (12) terminals, **characterized in that** it includes:
between the positive terminal and a first terminal of a capacitor (C) across which the approximately D.C. supply voltage (Vout) of the load (2, 2', 2") is taken, a one-way conduction element (D); and
between the positive and negative terminals, a voltage dividing bridge (R1, R2) providing a low voltage (Vpa) proportional to the rectified voltage (Vr).

3. The circuit of claim 2, **characterized in that** it includes a means (6, 6', 6") of integration of the rectified low voltage (Vpa) to provide an analog low voltage (Vp) depending on the phase angle of the A.C. voltage (Vin).

4. The circuit of claim 2 or 3, **characterized in that** the phase angle variation of the A.C. voltage (Vin) is performed over at most one half-halfwave and outside charge periods of the capacitor (C).

5. The circuit of any of claims 1 to 4, **characterized in that** the information is an operating control signal for an energy converter (4, 4', 4") meant to control the load (2, 2', 2").

6. The circuit of any of claims 1 to 5, **characterized in that** the phase angle variation of the A.C. voltage (Vin) is performed between 50 and 100% by means of a variator (3') by phase angle cut-off.

7. The circuit of any of claims 1 to 6, **characterized in that** the load (2') is a fluorescent lamp (T).

8. A method of transmission of information over an A.C. supply line of a supply circuit of a load having a capacitive input impedance including a capacitor adapted to providing an approximately D.C. voltage, **characterized in that** it consists of:
on the transmitter side, varying the phase angle of the A.C. voltage over at most one half-halfwave and outside charge periods of the capacitor; and
on the receiver side, isolating the information relative to the phase angle upstream of the capacitor.

## Patentansprüche

1. Stromversorgungsschaltung für eine Verbraucherlast (2, 2', 2") auf der Grundlage einer durch Gleichrichtung (5) einer Wechselspannung (Vin) erhaltenen annähernden Gleichspannung (Vout), **dadurch gekennzeichnet, dass** die Schaltung umfasst:
- Mittel (1'), um aus der gleichgerichteten Wechselspannung (Vr) eine Information in Gestalt einer Funktion einer Änderung des Phasenwinkels der Wechselspannung (Vin) zu gewinnen; sowie
- ein Mittel (D), um die annähernde Gleichspannung (Vout) für die Stromversorgung der Last unabhängig von der genannten Phasenwinkeländerung der Wechselspannung zu machen

2. Schaltung nach Anspruch 1, in welcher die genannte gleichgerichtete Wechselspannung (Vr) zwischen zwei Anschlüssen, einem positiven (13) und einem negativen (12), geliefert wird, **dadurch gekennzeichnet, dass** die Schaltung umfasst:
- ein Element (D) mit unidirektionaler Leitfähigkeit zwischen dem positiven Anschluß und einem ersten Anschluß eines Kondensators (C), an dessen Anschlüssen die annähernde Gleichspannung (Vout) für die Stromversorgung der Verbraucherlast (2, 2', 2") abgenommen wird;
- zwischen dem genannten positiven und negativen Anschluß eine Spannungsteilerbrücke (R1, R2),welche eine der gleichgerichteten Spannung (Vr) proportionale Niedrigspannung (Vpa) liefert.

3. Schaltung nach Anspruch 2, **dadurch gekennzeichnet, dass** sie ein Mittel (6, 5' , 6") zur. Integration der niedrigen Gleichrichtspannung (Vpa) umfasst zur Bildung einer niedrigen Analogspannung (Vp) als Funktion des Phasenwinkels der Wechselspannung (Vin)

4. Schaltung nach Anspruch 2 oder 3, **dadurch gekennzeichnet, dass** die Änderung des Phasenwinkels der Wechselspannung (Vin) höchstens über eine halbe Halbperiode und außerhalb der Aufladungsperioden des Kondensators (C) erfolgt.

5. Schaltung nach einem der Ansprüche 1 bis 4, **dadurch gekennzeichnet, dass** die genannte Information eine Betriebsvorgabe für einen zur Steuerung der Verbraucherlast (2, 2', 2") bestimmten Energiewandler (4,4',4") ist

6. Schaltung nach einem der Ansprüche 1 bis 5, **dadurch gekennzeichnet, dass** die Phasenwinkeländerung der Wechselspannung (Vin) zwischen 50 und 100% mittels eines Variators (3') mit Phasenwinkelanschnitt erfolgt

7. Schaltung nach einem der Ansprüche 1 bis 6, **dadurch gekennzeichnet, dass** die Verbraucherlast (2') eine Fluoreszenzlampe (T) ist

8. Verfahren zur Übertragung einer Information über eine Wechselstrom-Versorgungsleitung einer Stromversorgungsschaltung für eine Verbraucherlast, mit kapazitiver Eingangsimpedanz, mit einem Kondensator, der eine annähernde Gleichspannung liefern kann, das Verfahren **dadurch gekennzeichnet, dass** es besteht in
auf der Übertrager- bzw Sender seite: Variieren des Phasenwinkels der Wechselspannung über höchstens eine halbe Halbperiode und außerhalb der Aufladungsperioden des Kondensators; sowie
auf der Empfangsseite: Abtrennen der den Phasenwinkel betreffenden Information stromaufwärts des Kondensators
